# EUROPÄISCHE PATENTSCHRIFT

(11) **EP 2 394 072 B1**
(45) Veröffentlichungstag und Bekanntmachung des Hinweises auf die Patenterteilung: **26.12.2012**
(21) Anmeldenummer: 10703226.0
(22) Anmeldetag: 27.01.2010
(51) Int. Cl.: F16D 65/12, F16D 69/02

(54) **VERFAHREN ZUR HERSTELLUNG EINER BREMSSCHEIBE**
METHOD FOR PRODUCING A BRAKE DISC
PROCÉDÉ DE FABRICATION D'UN DISQUE DE FREIN

(30) Priorität: 09.02.2009 DE 102009008114
(43) Veröffentlichungstag der Anmeldung: 14.12.2011
(73) Patentinhaber: Daimler AG, 70327 Stuttgart (DE)
(72) Erfinder: LEMBACH, Oliver, 71063 Sindelfingen (DE); MAYER, Ralph, 85049 Ingolstadt (DE)
(74) Vertreter: JENSEN & SON
(86) Internationale Anmeldenummer: PCT/EP2010/000483
(87) Internationale Veröffentlichungsnummer: WO 2010/089048

(56) Entgegenhaltungen:
- EP-A1- 0 896 165
- DE-A1- 10 203 507
- DE-A1-102004 016 098
- US-A- 3 702 126
- US-A1- 2005 082 123
- US-A1- 2006 272 909

## Beschreibung

Die Erfindung betrifft ein Verfahren zur Herstellung einer Bremsscheibe für ein Fahrzeug nach den Merkmalen des Oberbegriffs des Anspruchs 1.

Aus dem Stand der Technik ist, wie in DE 10 2004 016 098 A1 beschrieben, eine Bremsscheibe für ein Fahrzeug sowie ein Verfahren zur Herstellung einer Bremsscheibe bekannt. Die Bremsscheibe weist mindestens einen Grundkörper auf, welcher mindestens partiell im Bereich seiner äußeren Oberfläche eine verschleißfeste Schicht trägt, die als Reibschicht dient, wobei mindestens eine Zwischenschicht als haftvermittelnde Schicht und/oder als Korrosionsschutzschicht zwischen dem Grundkörper und mindestens einer äußeren verschleißfesten Schicht aufgebracht wird und diese mindestens eine Zwischenschicht galvanisch aufgebracht wird.

In der DE 10 2005 008 569 A1 wird ein Reibelement und ein Verfahren zu dessen Herstellung beschrieben. In dem Verfahren wird ein Reibelementgrundkörper bereitgestellt und eine Beschichtung aufgebracht. Die Beschichtung weist eine Einschmelzlegierung auf und wird eingeschmolzen.

Aus der gattungsbildenden DE 102 03 507 A 1 ist eine Bremsscheibe für ein Fahrzeug sowie ein Verfahren zu ihrer Herstellung bekannt. Die Bremsscheibe umfasst einen Grundkörper aus einem metallischen Werkstoff, insbesondere Grauguss, welcher wenigstens eine Reibfläche mit einer Beschichtung aus einem harten Material mit hohem Reibwert aufweist. Der Grundkörper wird um die Schichtdicke der Beschichtung abgedreht in Richtung achsparallel zur Achse der Bremsscheibe. Die Beschichtung besteht beispielsweise aus Aluminiumoxid, Diamant oder einem keramischen Material.

In der DE 103 42 743 A1 ist eine Bremsscheibe für ein Fahrzeug sowie ein Verfahren zu deren Herstellung beschrieben. Die Bremsscheibe umfasst einen Grundkörper, welcher eine mindestens im Bereich der äußeren Oberfläche verschleißfeste Schicht trägt, die als Reibschicht dient sowie einen Bereich aus einem Material zur Haftvermittlung zwischen dem Grundkörper und der mindestens einen verschleißfesten äußeren Schicht aufweist, wobei der Bereich aus dem Material zur Haftvermittlung und die verschleißfeste äußere Schicht als mindestens eine Gradientenschicht ausgebildet ist, deren Zusammensetzung sich in Schichtdickenrichtung ändert.

Aus der DE 103 45 000 B3 ist eine Vorrichtung und ein Verfahren zur Herstellung von Bremsteilen bekannt. Bei dem Verfahren zur Herstellung von Bremsteilen wird für deren ringförmige Bremsfläche eine Verschleißschutzschicht vorgesehen, die durch oberflächenseitiges Anschmelzen des Trägermaterials und Vermischen von Beschichtungswerkstoff mit der Schmelze gebildet und in das Trägermaterial eingebunden wird, wobei der Energieeintrag zum oberflächenseitigen Anschmelzen des Trägermaterials über Lichtwellen, Lichtbogen, Plasma und/oder Elektronenstrahl erfolgt und insbesondere, bevorzugt über einen Laser, als Strahlungsenergie in Form von Lichtwellen auf die anzuschmelzende Oberfläche einwirkt.

Der Erfindung liegt die Aufgabe zugrunde, ein verbessertes Verfahren zur Herstellung einer Bremsscheibe für ein Fahrzeug anzugeben.

Die Aufgabe wird erfindungsgemäß durch ein Verfahren zur Herstellung einer Bremsscheibe für ein Fahrzeug mit den Merkmalen des Anspruchs 1 gelöst.

Bevorzugte Ausgestaltungen und Weiterbildungen der Erfindung sind in dem abhängigen Anspruch angegeben.

In einem Verfahren zur Herstellung einer Bremsscheibe für ein Fahrzeug, umfassend einen Grundkörper aus einem metallischen Werkstoff, insbesondere Grauguss, welcher Reibflächen aufweist, werden die Reibflächen erfindungsgemäß mittels Carborieren, Carbonitrieren, Einsatzhärten, Gasnitrieren, Oxidnitrieren, Gasnitrocarburieren, Plasmanitrieren, Plasmaoxidieren, Borieren, Plasmakarborieren oder Plasmaborieren nachbehandelt.

Durch diese Nachbehandlung wird eine oberflächennahe Härtung der Reibflächen erzielt, so dass durch eindiffundierte Atome eine verschleißfeste und korrosionsbeständige gehärtete Oberflächenschicht gebildet wird. Durch die efindungsgemäße Lösung ist somit eine kostengünstige Bremsscheibe herstellbar, welche einen geringeren Verschleiß aufweist als herkömmliche Bremsscheiben und dadurch länger nutzbar ist. Die erfindungsgemäße Lösung ermöglicht einen gleichmäßigen Reibwert der Bremsscheibe und eine Reduzierung beim Bremsen auftretender Temperaturen, wodurch ein so genanntes Bremsenfading, d. h. ein Ausfall der Bremse aufgrund Überhitzung vermeidbar ist. Durch eine Reduzierung von Vibrationen und Geräuschen beim Bremsen ist zudem eine Komfortsteigerung erzielbar.

Ausführungsbeispiele der Efindung werden anhand von Zeichnungen näher erläutert.

Dabei zeigen:
- Fig. 1: einen Längsschnitt durch eine erste Ausführungsform einer erfindungsgemäßen Bremsscheibe, und
- Fig. 2: einen Längsschnitt durch eine zweite Ausführungsform einer erfindungsgemäßen Bremsscheibe.

Einander entsprechende Teile sind in allen Figuren mit den gleichen Bezugszeichen versehen.

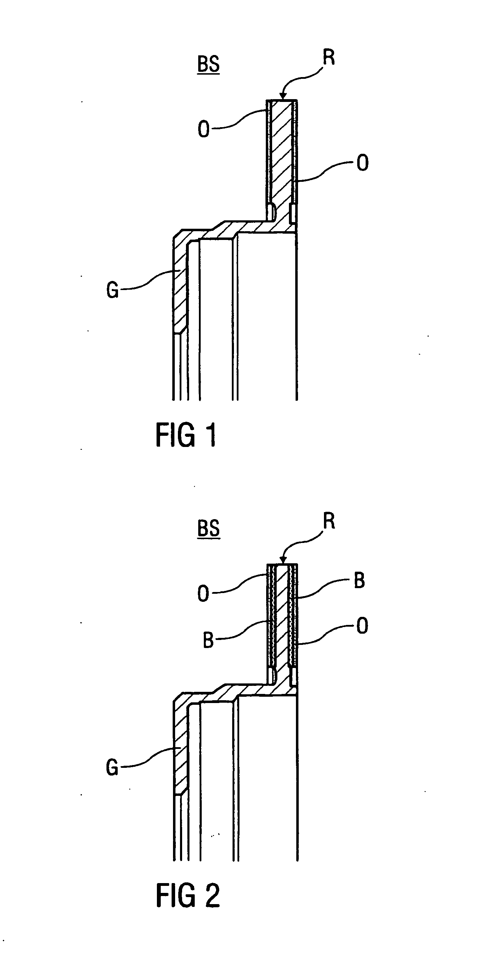

Figur 1 zeigt einen Längsschnitt durch eine erste Ausführungsform einer erfindungsgemäßen Bremsscheibe BS. Die Bremsscheibe BS ist gebildet aus einem Grundkörper G aus einem metallischen Werkstoff, beispielsweise aus Grauguss. Der Grundkörper G weist Reibflächen R auf. Diese Reibflächen R werden mittels Carborieren, Carbonitrieren, Einsatzhärten, Gasnitrieren, Oxidnitrieren, Gasnitrocarburieren, Plasmanitrieren, Plasmaoxidieren, Borieren, Plasmakarborieren oder Plasmaborieren nachbehandelt, so dass eine gehärtete Oberflächenschicht O gebildet wird.

Beim Carbonitrieren werden Kohlenstoff und in geringeren Mengen Stickstoff in die zu härtende Oberflächenschicht O der Reibflächen R eindiffundiert. Das Carbonitrieren findet bei Temperaturen von 750°C bis 930°C statt. Dabei erzeugte Carbonitriertiefen liegen zwischen 0,06 mm und 0,6 mm, abhängig von der gewählten Temperatur. In einem oberen Temperaturbereich ist eine Stickstoffaufnahme geringer als in einem unteren Temperaturbereich, d. h. die Temperatur wird entsprechend der gewünschten Eigenschaften gewählt. Nach dem Carbonitrieren wird die Bremsscheibe BS bzw. werden die Reibflächen R abgeschreckt und angelassen, bei etwa 150°C bis 200°C.

Beim Einsatzhärten werden die Reibflächen R aufgekohlt, gehärtet und angelassen. Dabei wird die zu härtende Oberflächenschicht O zunächst in einem geeigneten Aufkohlungsmedium mit Kohlenstoff angereichert. Danach wird das Härten und Anlassen durchgeführt. Hierdurch werden eine Härte und eine Einsatzhärtungstiefe eingestellt. Das Aufkohlen kann beispielsweise in einem Salzbad, in einem Granulat, in einem Atmosphärenofen mittels Gasaufkohlung oder in einem Niederdruck mit oder ohne Plasmaunterstützung erfolgen.

Da nicht die ganze Bremsscheibe BS, sondern nur die Reibflächen R aufgekohlt werden sollen, sind nicht aufzukohlende Teile der Bremsscheibe BS mit einer hitzebeständigen Schutzpaste abzudecken. Bei einer Aufkohlung im Salzbad ist keine derartige Abdeckung erforderlich, da lediglich die aufzukohlenden Reibflächen R in das Salzbad eingetaucht werden. Dadurch ist eine Fertigungsvereinfachung erreichbar. Nach dem Aufkohlen werden die Reibflächen R durch ein Abschrecken gehärtet. Dieses Abschrecken kann beispielsweise in einem flüssigen Abschreckmedium erfolgen, zum Beispiel Wasser, Härteöl, Polymer, in einer Salzschmelze oder in einer Metallschmelze. Alternativ dazu kann das Abschrecken in einem gasförmigen Abschreckmedium erfolgen, beispielsweise in Stickstoff, Helium, mittels eines Gasdüsenfeldes oder durch eine Hochdruckgasabschreckung. Nach dem Härten werden die Reibflächen R angelassen. Die durch das Einsatzhärten auf den Reibflächen R gebildete gehärtete Oberflächenschicht O weist wesentlich bessere Verschleiß- und Korrosionseigenschaften auf als nicht gehärtete Reibflächen R.

Beim Gasnitrieren, welches bei Temperaturen zwischen 500°C und 590°C durchgeführt wird, wird Stickstoff durch Diffusion in die zu härtende Oberflächenschicht O der Reibflächen R eingebracht. Da dabei praktisch kein Verzug und keine Maßveränderungen der Bremsscheibe BS auftreten, sind keine aufwändigen Nacharbeiten wie beispielsweise ein Nachschleifen erforderlich. Eine Nitriertiefe beträgt bis zu 1 mm. Durch dieses Verfahren ist ein besonders hoher Korrosionsschutz erreichbar. Beim Gasnitrieren wird die Bremsscheibe BS in einem gasdichten Ofen hängend oder auf Chargiervorrichtungen stehend erwärmt und während einer Aufheizzeit sowie während einer Behandlungszeit einem stickstoffhaltigen Gas ausgesetzt, beispielsweise Ammoniak. Nicht zu nitrierende Bereiche der Bremsscheibe BS werden vorher mit einer Schutzpaste abgedeckt.

Durch Gasnitrieren entstehen Verbindungsschichten, welche aus einer intermetallischen Verbindung von Eisen und Stickstoff bestehen, bis zu 20 µm dick sind und eine große Härte bei geringer Sprödigkeit aufweisen. Darunter befindet sich eine Diffusionszone, die bis zu 0,8 mm tief in das Material reicht. Hier ist der Stickstoff in das vorhandene Eisengitter eingelagert und bildet mit Legierungselementen wie Chrom, Molybdän, Titan, Aluminium oder Vanadium Sondemitride. Diese Sondemitride sind für eine hohe Härte und Verschleißfestigkeit maßgebend. Eine erforderliche Behandlungszeit ist abhängig von einem zu nitrierenden Werkstoff und einer zu erreichenden Schichtdicke der Oberflächenschicht O. Durch eine Anpassung einer Gaszusammensetzung ist eine optimale Oberflächenschicht **O** auf den Reibflächen R erzielbar, welche die gewünschten Eigenschaften aufweist.

Eine weitere Verfahrensvariante des Nitrierens ist das Plasmanitrieren. Bei diesem Verfahren wird die Bremsscheibe BS in einem Vakuumofen bei 400°C bis 580°C mittels eines ionisierten Gases nitriert, d. h. es wird Stickstoff in die zu härtende Oberflächenschicht **O** eindiffundiert. Nicht zu härtende Teile der Bremsscheibe BS werden vorher mit einer Schutzpaste abgedeckt. Das Gas, beispielsweise Stickstoff, Methan, Ammoniak oder Wasserstoff, wird durch eine hohe Spannung von 600 V bis 1000 V und einen niedrigen Druck von einem nicht leitenden Gas in ein teilweise ionisiertes, elektrisch leitendes Plasma umgewandelt. Eine erforderliche Behandlungszeit ist abhängig von einem zu nitrierenden Werkstoff und einer zu erreichenden Schichtdicke der Oberflächenschicht O. Durch eine Anpassung der Gaszusammensetzung sowie des Drucks und der Temperatur ist eine optimale Oberflächenschicht O auf den Reibflächen R erzielbar, welche die gewünschten Eigenschaften aufweist. Die Schichtzusammensetzung der Oberflächenschicht O nach dem Plasmanitrieren entspricht der bereits geschilderten Schichtzusammensetzung beim Gasnitrieren.

Beim Gasnitrocarburieren wird die zu härtende Oberflächenschicht O mit Stickstoff und Kohlenstoff angereichert. Somit entsteht eine Nitrierschicht, bestehend aus einer Verbindungsschicht und einer Diffusionsschicht. Das Gasnitrocarburieren wird bei Temperaturen zwischen 500°C und 630°C in einem Gasgemisch, welches Stickstoff und Kohlenstoff abgeben kann, durchgeführt. Ein solches Gasgemisch besteht beispielsweise aus Ammoniak und Kohlendioxid.

Beim Borieren wird Bor in die zu härtende Oberflächenschicht O bei einer Temperatur von 850°C bis 950°C eingebracht. Das Bor kann in Pulverform oder in Pastenform vorliegen. Die Bremsscheibe BS wird darin eingelegt. Nicht zu borierende Flächen sind mit einer Schutzpaste abzudecken. Bis in eine Tiefe von 250 µm bildet sich eine Boridschicht, welche stengelartig nach oben wächst und eine gute Verankerung zum Material des Grundkörpers G aufweist, jedoch auch eine Volumenzunahme von ungefähr 25 % mit sich bringt. Dadurch ist eine Vickershärte der gehärteten Oberflächenschicht O von 2000 HV bis 2100 HV erzielbar, wodurch der Verschleiß der Bremsscheibe BS erheblich reduziert ist.

Eine Verfahrensvariante des Borierens ist das Plasmaborieren. Dabei wird ein borhaltiges Gas mittels einer Plasmaentladung derart aktiviert, dass ein Übergang von Bor aus dem Plasma in die zu härtende Oberflächenschicht O ermöglicht wird. Das Plasmaborieren wird bei einem Druck von 1 mbar bis 10 mbar und bei Temperaturen von 400°C und 1200°C durchgeführt. Eine erforderliche Behandlungszeit ist abhängig von einem zu borierenden Werkstoff und einer zu erreichenden Schichtdicke der Oberflächenschicht O.

Als weitere Verfahren können Carborieren, Oxidnitrieren, Plasmaoxidieren und Plasmakarborieren eingesetzt werden.

Figur 2 zeigt einen Längsschnitt durch eine zweite Ausführungsform der erfindungsgemäßen Bremsscheibe BS. In dieser Ausführungsform wird vor der Nachbehandlung auf die Reibflächen R eine Beschichtung B aus Carbiden, Keramik, Cermet oder Metallen aufgebracht, so dass sich durch die Nachbehandlung die gehärtete Oberflächenschicht O auf der Beschichtung B bildet.

In der aus Carbiden gebildeten Beschichtung B können zu einer Verbesserung von Eigenschaften der Beschichtung B weitere Legierungselemente wie beispielsweise Nickel enthalten sein.

Eine Beschichtung B aus Carbiden ist beispielsweise WCCr₃C₂Ni, d. h. diese Ausführungsform der Beschichtung B ist aus Wolframcarbid, vorzugsweise mit einem Anteil von ca. 73 Gewichtsprozent, Chromcarbid, vorzugsweise mit einem Anteil von ca. 20 Gewichtsprozent und Nickel, vorzugsweise mit einem Anteil von ca. 7 Gewichtsprozent gebildet.

Eine weitere Ausführungsform der Beschichtung B aus Carbiden ist WCCoCrNi, d. h. diese Ausführungsform der Beschichtung B ist aus Wolframcarbid, vorzugsweise mit einem Anteil von ca. 80 Gewichtsprozent, Cobalt, vorzugsweise mit einem Anteil von ca. 10 Gewichtsprozent, Chrom, vorzugsweise mit einem Anteil von ca. 4 Gewichtsprozent und Nickel, vorzugsweise mit einem Anteil von ca. 1 Gewichtsprozent gebildet.

Eine Beschichtung B aus Keramik ist beispielsweise gebildet aus Titanoxid (TiO₂) oder aus Aluminiumoxid (AL₂O₃), vorzugsweise mit einem Anteil zwischen 60 Gewichtsprozent und 97 Gewichtsprozent und Titanoxid (TiO₂), vorzugsweise mit einem Anteil zwischen 3 Gewichtsprozent und 40 Gewichtsprozent.

Die Beschichtung B aus Cermet ist gebildet aus einem Verbundwerkstoff aus Keramik in einer intermetallischen Matrix, beispielsweise ein als 316L bezeichneter Edelstahl, wobei die Keramik vorzugsweise mit einem Anteil von 70 Gewichtsprozent und die intermetallsiche Matrix vorzugsweise mit einem Anteil von 30 Gewichtsprozent enthalten ist. Die Keramik besteht vorzugsweise aus Aluminiumoxid (AL₂O₃) mit einem Anteil von 97 Gewichtsprozent und Titanoxid mit einem Anteil von 3 Gewichtsprozent.

Eine Beschichtung B aus Metall ist beispielsweise aus einem Chromstahl gebildet, welcher vorzugsweise einen Chromanteil von 18 Gewichtsprozent aufweist.

Ein prinzipieller Aufbau der Beschichtung B besteht aus einer harten Matrix, welche Einlagerungen aufweist. Durch die harte Matrix ist eine erhebliche Verschleißreduktion erzielbar. Durch die Einlagerungen sind ein Korrosionsschutz und eine Komfortverbesserung der Bremsscheibe BS durch eine Reduzierung von Vibrationen und Bremsgeräuschen erzielbar. Durch die nachfolgende Nachbehandlung mittels Carborieren, Carbonitrieren, Einsatzhärten, Gasnitrieren, Oxidnitrieren, Gasnitrocarburieren, Plasmanitrieren, Plasmaoxidieren, Borieren, Plasmakarborieren oder Plasmaborieren werden diese vorteilhaften Eigenschaften weiter verbessert.

Durch eine Vorbehandlung des Grundkörpers G der Bremsscheibe BS vor einem Aufbringen der Beschichtung B, beispielsweise durch ein Anschleifen der Reibflächen R, sind eine optimale Beschichtung B und ein optimaler Halt der Beschichtung B auf dem Grundkörper G erzielbar.

Als Beschichtungsverfahren sind vorzugsweise Hochgeschwindigkeitsflammspritzen, Plasmaspritzen, Kaltgasspritzen oder Lichtbogendrahtspritzen anwendbar. Das Hochgeschwindigkeitsflammspritzen eignet sich besonders zur Erzeugung der Beschichtung B aus Carbiden. Das Plasmaspritzen ist zur Erzeugung der Beschichtung B aus Keramik, Cermet oder Metall geeignet. Zur Erzeugung der Beschichtung B aus Metall sind auch das Kaltgasspritzen und das Lichtbogendrahtspritzen geeignet.

Beim Hochgeschwindigkeitsflammspritzen wird unter Verwendung von Sauerstoff und einem Brennstoff in einer Spritzpistole eine chemische Reaktion erzeugt. Durch einen dadurch entstehenden Druck werden Spritzpartikel eines Beschichtungswerkstoffs mit sehr hoher Geschwindigkeit auf die zu beschichtenden Reibflächen R aufgebracht. Der Beschichtungswerkstoff ist der Spritzpistole als Draht oder in Pulverform zuführbar.

Beim Plasmaspritzen wird durch einen Lichtbogen und ein diesen Lichtbogen durchströmendes Plasmagas ein Plasma erzeugt. In einen sich dadurch bildenden Plasmagasstrom wird der Beschichtungswerkstoff in Pulverform eingebracht, welcher durch das Plasma aufgeschmolzen und durch den Plasmagasstrom auf die zu beschichtenden Reibflächen R aufgespritzt wird.

Beim Kaltgasspritzen wird der Beschichtungswerkstoff in Pulverform mit sehr hoher Geschwindigkeit auf die zu beschichtenden Reibflächen R aufgespritzt. Dazu wird ein relativ niedrig aufgeheiztes Prozessgas durch Expansion in einer Lavaldüse auf Überschallgeschwindigkeit beschleunigt, wodurch sich ein Gasstrahl bildet. In diesen Gasstrahl wird der Beschichtungswerkstoff injiziert. Der pulverförmige Beschichtungswerkstoff wird dabei auf eine so hohe Geschwindigkeit beschleunigt, dass er im Gegensatz zu anderen thermischen Spritzverfahren auch ohne vorangehendes An- oder Aufschmelzen beim Aufprall auf die zu beschichtenden Reibflächen R eine dichte und fest haftende Schicht bildet.

Beim Lichtbogendrahtspritzen wird der Beschichtungswerkstoff in Drahtform mittels eines Lichtbogens aufgeschmolzen. Sich dadurch bildende Spritzpartikel werden mittels eines Zerstäubergases auf die zu beschichtenden Reibflächen R aufgespritzt.

Des Weiteren ist die Beschichtung B beispielsweise auch mittels Laserstrahl, Elektronenstrahl oder Induktion aufbringbar, wobei der Beschichtungswerkstoff beispielsweise in Pulverform auf die zu beschichtenden Reibflächen R aufgebracht und mittels Laserstrahl, Elektronenstrahl oder Induktion aufgeschmolzen wird.

Durch eine Variation von Verfahrensparametern der genannten Beschichtungsverfahren ist die Beschichtung B optimierbar, so dass eine optimal auf dem Grundkörper G haftende Beschichtung B mit optimalen Eigenschaften erzielbar ist, d. h. eine verschleiß- und korrosionsbeständige Beschichtung B mit einem optimierten Geräusch-, Vibrations- und Temperaturverhalten. Durch die nachfolgende Nachbehandlung mittels Carborieren, Carbonitrieren, Einsatzhärten, Gasnitrieren, Oxid nitrieren, Gasnitrocarburieren, Plasmanitrieren, Plasmaoxidieren, Borieren, Plasmakarborieren oder Plasmaborieren werden diese vorteilhaften Eigenschaften weiter verbessert.

## Patentansprüche

1. Verfahren zur Herstellung einer Bremsscheibe (BS) für ein Fahrzeug, umfassend einen Grundkörper (G) aus einem metallischen Werkstoff, insbesondere Grauguss, welcher Reibflächen (R) aufweist,
**dadurch gekennzeichnet, dass** die Reibflächen (R) mittels Carborieren, Carbonitrieren, Einsatzhärten, Gasnitrieren, Oxidnitrieren, Gasnitrocarburieren, Plasmanitrieren, Plasmaoxidieren, Borieren, Plasmakarborieren oder Plasmaborieren nachbehandelt werden, wobei vor der Nachbehandlung auf die Reibflächen (R) eine Beschichtung (B) aus Wolframcarbid, Chormcarbid und Nickel oder aus Wolframcarbid, Cobalt, Chrom und Nickel gebildet ist.

2. Verfahren nach Anspruch 2,
**dadurch gekennzeichnet, dass** die Beschichtung (B) mittels Hochgeschwindigkeitsflammspritzen, Plasmaspritzen, Kaltgasspritzen oder Lichtbogendrahtspritzen aufgebracht wird.

## Claims

1. Method for producing a brake disc (BS) for a vehicle, the brake disc (BS) comprising a base body (G) made of a metallic material, in particular grey cast iron, and having friction surfaces (R),
**characterised in that** the friction surfaces (R) are aftertreated by means of carburising, carbonitriding, case-hardening, gas nitriding, oxinitriding, gas nitrocarburising, plasma nitriding, boronising, plasma carburising or plasma boronising, wherein a coating (B) of tungsten carbide, chromium carbide and nickel or of tungsten carbide, cobalt, chromium and nickel is formed on the friction surfaces (R) before aftertreatment.

2. Method according to claim 2,
**characterised in that** the coating is applied by means of high-speed flame spraying, plasma spraying, cold gas spraying or arc wire spraying.

## Revendications

1. Procédé de fabrication d'un disque de frein (BS) pour un véhicule, ce disque comprenant un corps de base (G) en matériau métallique, en particulier en fonte grise, possédant des surfaces de friction (R), **caractérisé en ce que** les surfaces de friction (R) sont traitées par carburation, carbonitruration, cémentation, nitruration gazeuse, oxynitruration, nitrocarburation gazeuse, nitruration plasma, oxydation plasma, boruration, carburation plasma ou boruration plasma, après le traitement sur les surfaces de friction (R) se forme un revêtement (B) en carbure de tungstène, carbure de chrome, nickel, ou en carbure de tungstène, cobalt, chrome et nickel.

2. Procédé selon la revendication 2, **caractérisé en ce que** le revêtement (B) est appliqué par injection à la flamme grande vitesse, projection au plasma, pulvérisation gazeuse à froid ou par projection arc fil.
